# EUROPEAN PATENT APPLICATION

(11) **EP 0 911 722 A2**
(43) Date of publication of application: **28.04.1999**
(21) Application number: 98308398.1
(22) Date of filing: 14.10.1998
(51) Int. Cl.: G06F 3/06, G06F 11/00

(54) **Disk array device**

(30) Priority: 24.10.1997 JP 292220/97
(71) Applicant: ALPS ELECTRIC CO., LTD., Ota-ku Tokyo 145 (JP)
(72) Inventor: Gotoh, Mitsuo, Yokohama-shi, Kanagawa-ken (JP)
(74) Representative: Kensett, John Hinton

(57) **Abstract**

There is disclosed a disk array device capable of efficiently using an excess storage space of a newly incorporated disk having a large storage capacity without stopping a host system. When a storage device is replaced with a new storage device, if the capacity of the new storage device is greater than the capacity of the removed storage device, an additional logical drive is created using the excess storage space of the new storage device.

## Description

The present invention relates to a disk array device, and more particularly, to a disk array device capable of effectively using an increased storage space obtained when a storage device such as a hard disk is replaced with another storage device having a greater storage capacity.

### 2. Description of the Related Art

As is known in the art, a disk array device is used to build a large-capacity and short access-time disk subsystem by connecting a plurality of disks via parallel interfaces thereby achieving a storage device having improved performance.

In this type of disk array device, data is distributed among a plurality of disks so that the data can be accessed in parallel at a high speed. Furthermore, in the case where a parity disk is provided, when one of the disks fails, data can be reconstructed and recovered on the basis of parity information.

If there is a spare disk, when one disk fails, the same data as that stored on the failed disk is created on the spare disk, and the failed disk may be disconnected from the system or replaced with a new disk while maintaining the system in an active state.

However, in the conventional disk array device, when one disk fails, if it is replaced with a disk having a greater capacity, for example, twice the capacity of the failed disk, the increased storage space of the disk cannot be used in an efficient fashion. More specifically, in the RAID-3, RAID-4, and RAID-5 in which reliability is improved by storing parity data serving as redundancy data, it is required that each parity stipe should correspond to one data stripe of each disk and thus the total number of stripes of each disk should be equal to each other. Because of the above requirement, when a disk is replaced with a new disk having a storage capacity twice that of the former disk, only half the storage space can be used and thus the excess storage space becomes useless. Even when the excess storage space is used as an independent disk, this excess storage space is used as a low-reliability storage space including no redundancy.

To solve the above problem, Japanese Unexamined Patent Publication No. 8-63298 discloses a technique in which data stripes or redundancy data stripes corresponding to the data stripes are relocated depending on the capacities of respective disks of a disk array device and also on the tendency of access during the past operation so that the accessing load to the respective disks is optimized.

In this disk array device according to the conventional technique, the increased storage space of the new disk can be effectively used because the data stripes and redundancy data stripes are relocated on the disks including the new disk having a greater storage capacity.

However, in the conventional disk array device, when data stripes and redundancy data stripes are relocated and data is reconstructed after a disk is replaced, the new disk is simply assigned one logical drive (virtual disk) and the number of stripes is simply defined depending on the capacity of the new disk even in the case where the new disk has a greater capacity than the other disks (for example, when the new disk has a capacity twice the capacity of the other disks, as many stripes as twice the number of stripes of the removed disk are assigned).

In this technique, for the above reason, when a logical drive is reconstructed into a new logical drive, a host system has to wait for a long time until the data is completely restored for backup.

Furthermore, the above operation includes a complicated process for setting array parameters, and thus the operation has to be done by a highly skilled system administrator.

It is an object of the present invention to provide a disk array device capable of efficiently using the increased space of a higher-capacity disk newly incorporated into the disk array device without having to stop a host system.

According to the present invention there is provided a disk array device comprising: a plurality of storage devices; management information storage means for storing management information associated with said plurality of storage devices; storage device insertion/removal monitoring means for monitoring occurrence of removal and insertion of each of said plurality of storage devices; management information updating means for updating the management information in such a manner that when said storage device insertion/removal monitoring means detects an occurrence of removal and insertion of any of said plurality of storage devices, the management information associated with said plurality of storage devices acquired before said occurrence of removal and insertion is updated to management information acquired after said occurrence of removal and insertion; and logical drive construction means for reconstructing existing logical drives in accordance with the management information updated by said management information updating means when at least one of said plurality of storage devices is replaced with a new storage device, wherein if the storage capacity of said new storage device is greater than the storage capacity of the removed storage device, said logical drive construction means creates a new logical drive using the excess storage space of said new storage device.

Accordingly, when a storage device is replaced with a storage device having a higher storage capacity, the logical drive construction means creates a logical drive depending on the increase in the storage capacity. In this technique, after reconstructing existing logical drives, an additional new logical drive is created without stopping the host system, so that the excess storage space of the new disk can be used in a highly efficient manner.

Embodiments of the invention will now be described, by way of example only, with reference to the accompanying drawings, in which:
Fig. 1 is a block diagram illustrating an embodiment of a disk array device according to the present invention;
Fig. 2 is a schematic representation of reconstructing an existing logical drive into a new logical drive according to the embodiment of the invention; and
Fig. 3 is a flow chart illustrating the process of constructing a logical drive according to the embodiment of the invention.

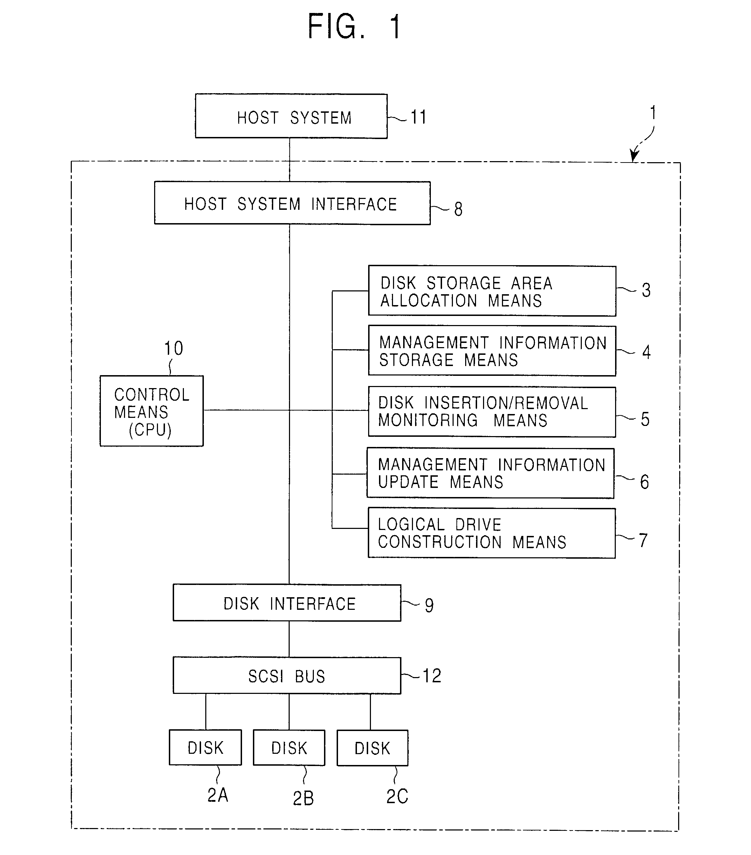

A preferred embodiment of the present invention is described below with reference to Figs. 1 to 3.

According to an embodiment of the present invention, as shown in Fig. 1, a disk array device 1 comprises: a disk set 2 including a plurality of disks 2A, 2B, and 2C serving as storage devices; disk storage area designation means 3 for designating which disk of the disk set 2 including disks 2A, 2B, and 2C should be accessed; management information storage means 4 for storing management information associated with the respective disks 2A, 2B, and 2C, on the basis of which logical drives are constructed; disk insertion/removal monitoring means 5 for monitoring disk insertion/removal which occurs when a failed disk 2X is replaced with a new disk 2Y; management information updating means 6 for updating the management information from the management information associated with the failed disk 2X to the management information associated with the new disk 2Y; logical drive construction means 7 for creating a new logical drive corresponding to the excess space of the disk 2Y according to the management information updated by the management information updating means 6; a host system interface 8 serving as an interface between a host system 11 and the disk array device 1; a disk interface 9 for providing an interface for access to the disk set 2; and control means 10 such as a CPU for controlling the overall operation of the respective means described above.

These means are described in further detail below.

The disks 2A, 2B, and 2C of the disk set 2 are nonvolatile and rewritable mass storage devices capable of randomly defining addresses. Specific examples of the disks include a magnetic disk, an optical disk, and a semiconductor disk.

The disk storage area designation means 3 controls the access to the disks 2A, 2B, and 2C by converting a logical address to physical addresses depending on the number of disks, the RAID level, the stripe size, and other factors and sends commands to proper disks 2A, 2B, and 2C.

The management information storage means 4 stores management information representing the status or array parameters for each logical drive number, such as correspondence information associated with the disk numbers of the respective logical drives and the data storage block numbers, the capacities and performance of the respective disks 2A, 2B, and 2C, and occurrence of disk insertion/removal.

The disk insertion/removal monitoring means 5 has a timer (not shown in the figure) thereby monitoring the occurrence of insertion/removal of the disks 2A, 2B, and 2C at fixed time intervals. More specifically, when a failure occurs in any disk 2A, 2B, or 2C, if the failed disk is removed for replacement with a spare disk 2Y or a new disk 2Y is inserted, the insertion/removal is detected by the disk insertion/removal monitoring means 5.

When insertion/removal of any disk 2A, 2B, and 2C is detected by the disk insertion/removal monitoring means 5, the management information updating means 6 updates the management information associated with the logical drive corresponding to the inserted/removed disk 2A, 2B, or 2C. For example, when a disk 2X fails and is replaced with a new disk, the management information associated with the failed disk 2X is deleted. Furthermore, the capacity of a new disk 2Y is detected and the management information such as storage block numbers is updated.

The.updating of the management information may be performed automatically or manually by a user.

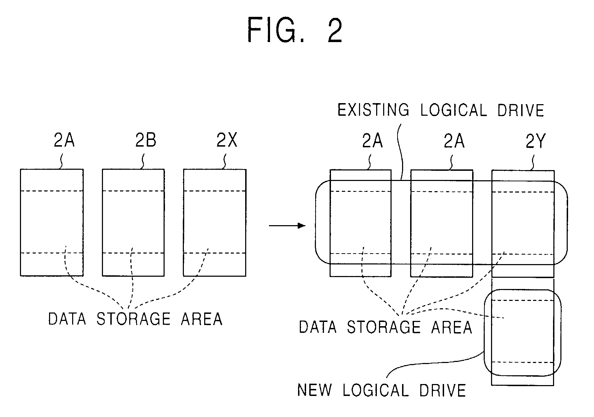

As shown in Fig. 2, the logical drive construction means 7 reconstructs the existing logical drive using the storage space of the inserted disk 2Y. If the capacity of the inserted disk 2Y is greater than the capacity of the removed disk 2X, the logical drive construction means 7 creates a new logical drive using the excess capacity in accordance with the updated management information.

For example, if the capacity of the inserted disk 2Y is twice the capacity of the removed disk 2X, a logical drive with a storage size corresponding to the capacity of the removed disk 2X is reconstructed on the inserted disk 2Y so that the created logical drive is consistent with the existing disks 1a and 1b and the parity disk, and the remaining area of the inserted disk 2Y is used to create a new logical drive.

In this technique, thus, it is not required to stop the host system 11 during the process of reconstructing the existing logical drives, and no problems occur when the new logical drive is created using the excess capacity of the inserted disk 2Y.

The control means 10 controls the various means so that the operations described above are performed properly. More specifically, the control means 10 controls the various mean for example during the process which starts when a failed disk 2X is replaced with a spare disk 2Y and which includes the reconstruction of the logical drive on the new disk 2Y and the creation of a new logical drive using the excess space.

The host system interface 8 handles the differences in the voltage, current, operation timing, and other factors between the host system 11 and the disk array device 1. The disk interface 9 handles the difference in the operation timing between the control means 10 and the disk set 2.

Between the disk interface 9 and the disk set 2, there is provided a SCSI bus 12 via which a signal output by the control means 10 is transmitted to the disk set 2.

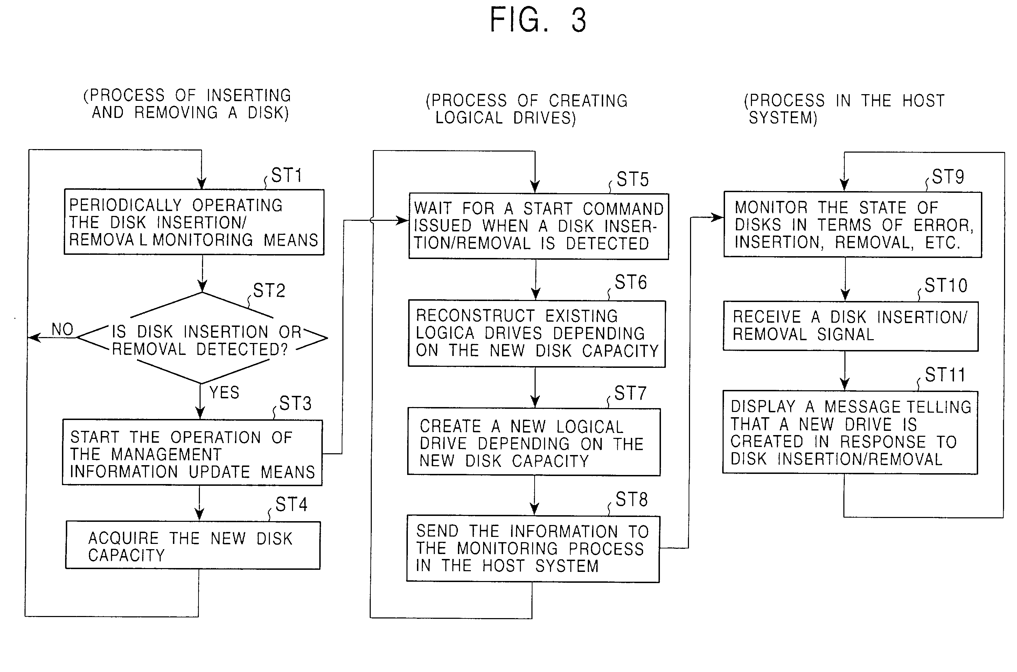

The process of constructing logical drives according to the present embodiment of the invention is described below with reference to Fig. 3.

In the present embodiment, at step ST1, the disk insertion/removal monitoring means 5 is periodically started under the control of the timer. At step ST2, the disk insertion/removal monitoring means 5 checks whether insertion/removal occurs for the disk 2A, 2B, and 2C of the disk set 2. If any disk 2A, 2B, or 2C is not removed and no disk is inserted, the process returns to step ST1 and continues the periodic checking of insertion/removal. On the other hand, if insertion/removal is detected for any disk 2A, 2B, or 2C, the process goes to step ST3.

If the disk insertion/removal monitoring means 5 determines that the replacement of a failed disk 2X with a new disk 2Y is completed, the control means 10 starts the management information updating means 6 at step ST3. Thus at the next step ST4, the management information updating means 6 acquires the capacity of the inserted disk 2Y and updates the management information associated with the failed disk 2X to the management information associated with the inserted disk 2Y. After completion of the above sequence, the process returns to step ST1 and repeatedly performs the above sequence in the closed loop.

When the management information updating means 6 is started, a message telling this fact is sent via intratask communication means (not shown) to the logical drive construction means 7. Then in the next step ST5, the above-described process of constructing logical drives is started.

In step ST5, if disk insertion/removal is detected, then the process goes to step ST6 at which the logical drive construction means 7 reconstructs the existing logical drive in accordance with the management information updated by the management information updating means 6 to represent the parameters such as the capacity of the new disk 2Y. That is, logical drive construction means 7 creates a logical drive on the new disk 2Y and replaces the logical drive on the failed disk 2X with the logical drive created on the new disk 2Y.

Then the process goes to step ST7 at which if the capacity of the inserted disk 2Y is greater than the capacity of the removed disk 2X, a new logical drive is created using the excess capacity thereby making it possible to effectively use the increased capacity of the new disk 2Y.

Upon completion of the construction of the new logical drive, the process goes to step ST8 at which logical drive construction means 7 notifies the checking and processing means (not shown in the figure) of the host system 11 via the control means 10 that the logical drive has been reconstructed. This notice is issued in response to a command from the checking and processing means of the host system 11.

After that, the logical drive reconstruction process returns to step ST5 and waits therein in the closed loop until the logical drive reconstruction process is again started in response to detection of occurrence of disk insertion/removal.

The process performed by the host system 11 is described below.

At step ST9, the checking and processing means of the host system 11 requests the disk array device 1 to send information about occurrence of errors in the disks 2A, 2B, and 2C and the occurrence of insertion/removal of the disks 2A, 2B, and 2C, and waits for a response.

At step ST10, if the checking and processing means of the host system 11 receives a signal from the disk insertion/removal monitoring means 5 via the control means 10, which tells that the disk 2X has been replaced with the disk 2Y, then the process goes to step ST11 at which a message is displayed on the display device (not shown in the figure) of the host system 11 to inform the user that the disk 2X has been replaced with the disk 2Y and that a new logical drive is going to be created. When the system administrator reads the above message, he/she determines whether it is required to initialize the drive so that the operating system can identify the drive. If the initialization is required, the system administrator performs the initialization using a tool of the operation system.

The new logical drive may be created automatically or manually by the user.

After that, the host system process further performs other checking processes and returns to step ST9 in the closed loop. The host system process waits, in step ST9, for arrival of a notice of occurrence of insertion/removal of any disk 2A, 2B, or 2C, issued by the logical drive construction process.

In the present embodiment of the invention, as described above, after reconstructing the existing logical drive, the additional new logical drive is created without stopping the host system 11 so that the excess storage space of the new disk 2Y having a greater capacity than the existing disk can be used in an efficient manner.

The present invention is not limited to the embodiment described above, but various modifications are possible as required.

As can be understood from the above description, the present invention has the advantage that when a disk having a greater storage capacity is newly incorporated into the disk array device, the excess storage space of the newly incorporated disk can be effectively used without stopping the host system.

## Claims

1. A disk array device comprising:
a plurality of storage devices;
management information storage means for storing management information associated with said plurality of storage devices;
storage device insertion/removal monitoring means for monitoring occurrence of removal and insertion of each of said plurality of storage devices;
management information updating means for updating the management information in such a manner that when said storage device insertion/removal monitoring means detects an occurrence of removal and insertion of any of said plurality of storage devices, the management information associated with said plurality of storage devices acquired before said occurrence of removal and insertion is updated to management information acquired after said occurrence of removal and insertion; and
logical drive construction means for reconstructing existing logical drives in accordance with the management information updated by said management information updating means when at least one of said plurality of storage devices is replaced with a new storage device,
wherein if the storage capacity of said new storage device is greater than the storage capacity of the removed storage device, said logical drive construction means creates a new logical drive using the excess storage space of said new storage device.
